# EUROPEAN PATENT APPLICATION

(11) **EP 4 412 326 A1**
(43) Date of publication of application: **07.08.2024**
(21) Application number: 22874197.1
(22) Date of filing: 28.04.2022
(51) Int. Cl.: H04W 60/00, H04W 12/06

(54) **REGISTRATION METHOD, TERMINAL DEVICE, CORE NETWORK DEVICE, AND STORAGE MEDIUM**

(30) Priority: 30.09.2021 CN 202111162260
(71) Applicant: ZTE Corporation, Shenzhen, Guangdong 518057 (CN)
(72) Inventor: LIU, Yuze, Shenzhen, Guangdong 518057 (CN); YOU, Shilin, Shenzhen, Guangdong 518057 (CN); PENG, Jin, Shenzhen, Guangdong 518057 (CN); XING, Zhen, Shenzhen, Guangdong 518057 (CN); LIN, Zhaoji, Shenzhen, Guangdong 518057 (CN)
(74) Representative: Zoli, Filippo
(86) International application number: PCT/CN2022/090050
(87) International publication number: WO 2023/050799

(57) **Abstract**

A registration method, a terminal device, a core network device, and a storage medium. The method is applied to a core network device and comprises: acquiring a first registration request message sent by a first terminal device, the first registration request message comprising a first identifier of the first terminal device (S410); acquiring information related to a second terminal device related to the first identifier (S420); if the information related to the second terminal device is active, acquiring a second identifier of the first terminal device (S430); and performing registration for the first terminal device according to the second identifier (S440).

## Description

### CROSS-REFERENCE TO RELATED APPLICATION

This application is filed on the basis of the Chinese patent application No. 202111162260.5 filed September 30, 2021, and claims priority of the Chinese patent application, the entire contents of which are incorporated herein by reference.

### TECHNICAL FIELD

The present disclosure relates to the technical field of communication, and in particular to a method for registration, a terminal device, a core network device, and a storage medium.

### BACKGROUND

The 3rd Generation Partnership Project (3GPP) defines the procedure of registration for user equipment (UE) in the 5th-generation (5G) systems. However, during the UE registration, if two UEs have the same 5G-globally unique temporary UE identity (5G-GUTI), and after the registration for one of the UEs is completed, the registration for the other one of the UEs may fail.

### SUMMARY

According to an embodiment of the present disclosure, there is provided a method for registration, which is applied to a core network device, the method includes, acquiring a first registration request message sent by a first terminal device, where the first registration request message includes a first identifier of the first terminal device; acquiring related information about a second terminal device associated with to the first identifier; acquiring a second identifier of the first terminal device, in response to the related information about the second terminal device being in an active state; and performing a registration for the first terminal device according to the second identifier.

According to an embodiment of the present disclosure, there is provided a method for registration, which is applied to a first terminal device, the method includes, sending a first registration request message to a core network device, where the first registration request message includes a first identifier of the first terminal device; and sending a second identifier of the first terminal device to the core network device to complete registration, in response to a satisfaction of a preset condition; where the preset condition is directed to an acquisition of an identifier request message sent by the core network device, or to a failure in an acquisition of a message related to the registration sent by the core network device within a preset time.

According to an embodiment of the present disclosure, there is provided a core network device, which includes a processor configured to carry out a computer program which, when executed by the processor, causes the processor to carry out the method as described above.

According to an embodiment of the present disclosure, there is provided a terminal device, which includes a processor configured to carry out a computer program which, when executed by the processor, causes the processor to carry out the method as described above.

According to an embodiment of the present disclosure, there is provided a computer-readable storage medium storing at least one computer program which, when executed by a processor, causes the processor to carry out any one of the methods according to any one of the embodiments described above.

With regard to the above embodiments and other aspects of the present disclosure and their implementations, more illustrations are provided in the brief description of drawings, detailed description and claims.

### BRIEF DESCRIPTION OF DRAWINGS

FIG. 1 depicts a schematic diagram showing the networking of a wireless communication system according to an embodiment;
FIG. 2 depicts a schematic diagram showing the networking of another wireless communication system according to an embodiment;
FIG. 3 depicts a flowchart showing the registration for a UE in a 5G system according to an embodiment;
FIG. 4 depicts a flowchart showing a method for registration according to an embodiment;
FIG. 5 depicts a flowchart showing another method for registration according to an embodiment;
FIG. 6 depicts a flowchart showing the interactions in a method for registration according to an embodiment;
FIG. 7 depicts a flowchart showing the interactions in another method for registration according to an embodiment;
FIG. 8 depicts a flowchart showing the interactions in yet another method for registration according to an embodiment;
FIG. 9 depicts a flowchart showing the interactions in yet another method for registration according to an embodiment;
FIG. 10 depicts a schematic diagram showing a core network device according to an embodiment;
FIG. 11 depicts a schematic diagram showing another core network device according to an embodiment;
FIG. 12 depicts a schematic diagram showing a terminal device according to an embodiment;
FIG. 13 depicts a schematic diagram showing an AMF according to an embodiment; and
FIG. 14 depicts a schematic diagram showing a UE according to an embodiment of the present disclosure.

### DETAILED DESCRIPTION

It should be understood that the embodiments described here are illustrative but not limiting. Some embodiments of the present disclosure will be illustrated with reference to the drawings below.

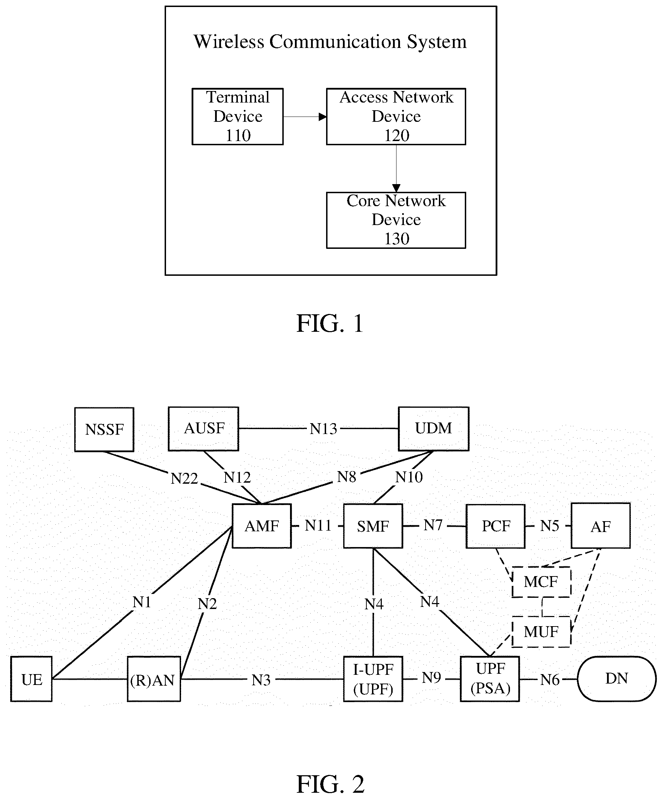

The method for registration set forth in an embodiment of the present disclosure can be applied to various wireless communication systems, such as a long-term evolution (LTE) system, a 5G system, a hybrid architecture system of LTE and 5G, a 5G new radio (NR) system, and new communication systems emerging in the future communication development, such as a 6th-generation (6G) system. FIG. 1 depicts a schematic diagram showing the networking of a wireless communication system according to an embodiment. As shown in FIG. 1, the wireless communication system includes a terminal device 110, an access network device 120, and a core network device 130.

The terminal device 110 can also be called a terminal, a user equipment (UE), a mobile station, a mobile terminal, or the like. The terminal device can be a device that provides voice/data connectivity to a user, such as a handheld device with a wireless connection function, a vehicle-mounted device, or the like. Examples of the terminal device can be, a mobile phone, a tablet computer, a computer with a wireless transceiver, a virtual reality terminal device, an augmented reality terminal device, a wireless terminal device in industrial control, a wireless terminal device in unmanned driving, a wireless terminal device in remote surgery, a wireless terminal device in smart grid, a wireless terminal device in transportation safety, a wireless terminal device in smart city, a wireless terminal device in smart home, or the like. No limitation is put on the technology and the form adopted by the terminal device in various embodiments of the present disclosure.

The access network device 120 is an access device via which the terminal device 110 wirelessly accesses the wireless communication system. An access network device can be a base station, an evolved NodeB (eNodeB), a transmission reception point (TRP), a next-generation NodeB (gNB) in a 5G mobile communication system, a base station in a future mobile communication system or an access node in a Wi-Fi system. An access network device can also be a module or unit that completes some functions of a base station. For example, an access network device can be a central unit (CU) or a distributed unit (DU). No limitation is put on the technology and the form adopted by the access network device in various embodiments of the present disclosure.

The core network device 130 may include an access and mobility management function (AMF), and a session management function (SMF). In an example, the terminal device 110 can access the core network through the access network device 120, for data transmission.

As the method for registration according to an embodiment of the present disclosure is mainly based on the 5G mobile communication technology and other future mobile communication technologies, another wireless communication system architecture according to an embodiment of the present disclosure, i.e., the 5G system architecture, will be introduced with reference to FIG. 2, which depicts a schematic diagram showing the networking of another wireless communication system according to an embodiment. As shown in FIG. 2, the wireless communication system includes the following.
1. User equipment (UE).
2. (R)AN (radio access network), which is configured to provide access for an authorized user located in a specific area, and can employ transmission tunnels with different qualities according to the user's level and service requirements. (R)AN network element can manage wireless resources, provide access for a terminal device, and then complete the forwarding of control signals and user data between the terminal device and the core network. The (R)AN can also be understood as a base station in a traditional network.
3. An access and mobility management function (AMF), which is mainly configured for mobility management and access management. The AMF can be configured to realize all the functions of a mobility management entity (MME) except the session management, such as lawful listening, or access authorization (or authentication).
4. Session Management Function (SMF), also known as session management function network element, which is mainly configured for session management, Internet Protocol (IP) address allocation and management for terminal devices, selection of a manageable user plane function, policy control, or termination of charging function interfaces, and downlink data notification.

It can be understood that in the wireless communication system shown in FIG. 1, the access network device 120 can be the RAN shown in FIG. 2. The access and mobility management network element can be the AMF shown in FIG. 2. The session management network element can be the SMF shown in FIG. 2.

The wireless communication system may further include the following.

5. User Plane Function (UPF), which can be also called user plane function or user plane network element or user plane function network element, which is configured for packet routing and forwarding, or quality of service (QoS) processing of user plane data, etc. The type of the UPF includes an intermediate-UPF (I-UPF) and an anchor-UPF (A-UPF). I-UPF is connected with access network RAN, A-UPF is UPF of session anchor, and A-UPF can also be called protocol data unit (PDU) session anchor (PSA).

6. Data network (DN), which is a network configured for data transmission, such as the Internet. In the architecture of an embodiment of the present disclosure, the PSA accesses a remote DN.

7. Authentication Server Function (AUSF), which is mainly configured for user authentication, etc.

8. Policy Control Function (PCF), which is a unified policy framework configured for guiding network behavior, and providing policy rule information for control plane function network elements (such as AMF and SMF).

9. Unified Data Management (UDM), which is configured to handle user identifiers, access authentication, registration, or mobility management.

10. Application Function (AF), which mainly supports the interaction with the 3GPP core network to provide services, for example, influencing data routing decisions, policy control function, or providing some services of a third party to the network side. The AF can be understood as a third-party server, for example, an application server on the Internet, which provides relevant service information, including providing PCF with service quality requirement information corresponding to the service and sending user plane data information of the service to PSA-UPF. The AF can be a content provider (CP).

11. Network slice selection function (NSSF), which is configured to select a network slice.

In this wireless communication system, interface N1 is the reference point between the terminal device and AMF. Interface N2 is the reference point between (R)AN and AMF, and is intended for the transmission of the non-access stratum (NAS) messages, etc. Interface N3 is the reference point between (R)AN and I-UPF, and is intended for transmission of data of user plane, etc. Interface N4 is the reference point between SMF and I-UPF, and is intended for transmission of information such as tunnel identifier information of N3 connection, data cache indication information and downlink data notification message. Interface N5 is the reference point between PCF and AF. Interface N6 is the reference point between UPF and DN, which is intended for the transmission of data of the user plane. Interface N7 is the reference point between SMF and PCF. Interface N8 is the reference point between AMF and UDM. Interface N9 is the reference point between UPFs. Interface N10 is the reference point between SMF and UDM. Interface N11 is the reference point between AMF and SMF. Interface N12 is the reference point between AMF and AUSF. Interface N13 is the reference point between AUSF and UDM. Interface N22 is the reference point between AMF and NSSF.

The wireless communication system may further include the following.

12. Multicast Control plane Function (MCF), which is configured to control multicast services. MCF interfaces with a content provider to receive information related to multicast services (such as the description of multicast services), and interfaces with PCF to create resources for multicast services. It should be noted here that in the 5G network, the above MCF network element can also be called by another name, which realizes the control plane function of multicast service.

13. Multicast User plane Function (MUF), which is configured to transfer data related to multicast service, that is, to send multicast data received from CP to UPF. It should be noted here that in the 5G network, the above MUF network element can also be called by another name, which realizes the user plane function of multicast service.

In this wireless communication system, the MCF can be integrated into the PCF (or SMF)Additionally or alternatively, the MUF can be integrated into the UPF. The present disclosure is not limited thereto.

It can be understood that the above-described wireless communication system applied to an embodiment of the present disclosure is only an illustrative network architecture described from the perspective of reference point architecture, and the network architecture applicable to an embodiment of the present disclosure is not limited thereto. Any network architecture that can realize the functions of the above-described network elements is applicable to an embodiment of the present disclosure.

In addition, the interfaces between network elements in FIG. 2 are named just by way of an example, and those network elements in an implementation may be named in another way. The names of various network elements (such as SMF, AF, UPF, etc.) included in FIG. 2 are described only by way of an example and do not limit the functions of the named network elements. In the 5G networks and other future networks, the above-described network elements can also be named in other ways, and the present disclosure is not limited thereto. For example, in 6G networks, some or all of the above-described network elements may follow the terminology in 5G, or may have other names. In addition, it should be understood that the name of the message (or signaling) transmitted between the above-described network elements is described only by way of an example, and does not constitute any limitation on the function of the named message itself.

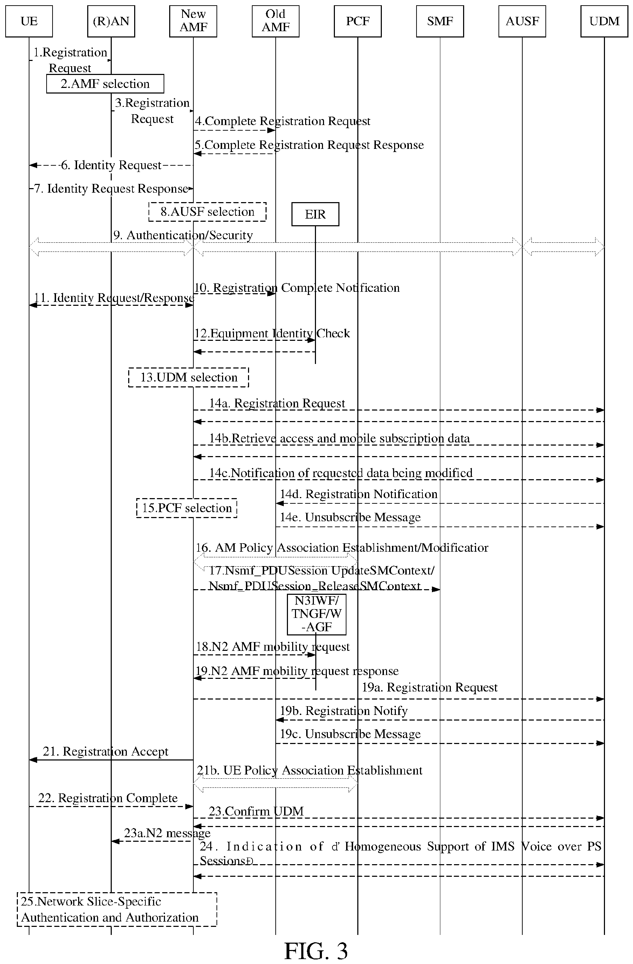

FIG. 3 depicts flowchart showing the registration of a UE in a 5G system according to an embodiment. As shown in FIG. 3, the registration may include the following operations.
1 .The UE sends a registration request to the (R)AN.
2.AMF selection process, i.e., the (R)AN chooses an AMF according to its own policy.
3.(R)AN sends a registration request to a new AMF.
4. The new AMF sends a complete registration request to the old AMF.
5. The old AMF replies with a complete registration request response.
6. The new AMF initiates an authentication request to the UE.
7. The UE replies with an authentication request response.
8. AUSF selection.
9. Authentication or security process.
10. The new AMF sends a registration complete notification to the old AMF.
11. The new AMF initiates an identity request to the UE and receives the identity response returned by the UE.
12. The new AMF initiates an equipment identity authentication process to the Equipment Identity Register (EIR).
13.UDM selection process.
14a. A registration request (Nudm_UECM_Registration) is initiated to the UDM.
14b. Retrieve access and mobile subscription data in SMF data.
14c. The new AMF sends the requested data modification notice to UDM.
14d.UDM sends a deregistration notification (Nudm_UECM_DeregistrationNotification) to the old AMF, so that the old AMF deletes the context information of the UE.14e. The old AMF sends an unsubscribe message to the UDM.
15.PCF selection process.
16. The new AMF implements the AM policy association establishment/modification.
17. The new AMF sends a network slice management function (NSMF) session update/release context request to the SMF.
18. The new AMF sends N2 AMF mobility request (such as UE context modification request) to non-3GPP interworking function (N3IWF)/ trusted non-3GPP gateway function (TNGF)/ wireline access gateway function (W-AGF).19.N3IWF/TNGF/ W-AGF replies to the new AMF with N2 AMF mobility request response (such as UE context modification response).
19a. After the new AMF receives the N2 AMF mobility request response from N3IWF/TNGF/ W-AGF in operation 19, the new AMF employs Nudm_UECM_Registration as operation 14c to register with UDM, but sets the access type to "non-3GPP access".
19b. When the UDM stores the access type (i.e., non-3GPP) together with the AMF of the service, the UDM initiates the Nudm _ UECM _ DeregistrationNotification to the old AMF corresponding to the same (i.e., non-3GPP) access, and the old AMF removes the UE context for the non-3GPP access.
19c. Old AMF employs Nudm_SDM_unsubscribe to unsubscribe from UDM.
21. The new AMF sends a registration acceptance message to the UE.
21b.UE policy association establishment, and this operation will be skipped for emergency registration.
22. The UE sends a registration completion message to the new AMF.
23. The new AMF provides Nudm_SDM_Info employed by the UE, to confirm to UDM.
23a. For the registration through 3GPP access, if the new AMF does not release the signaling connection, the new AMF sends RRC invalid auxiliary information to (R) AN. For the registration through non-3GPP access, if the UE is also in CM-CONNECTED state on 3GPP access, the new AMF sends RRC invalid auxiliary information to (R) AN.
24. The new AMF employs Nudm_UECM_Update to send an indication of "Homogeneous Support of IMS Voice over PS Sessions" to UDM.
25. Authentication and authorization of specific network slices.

Assume that UE A initiates a registration process to AMF through 5G-GUTI, and AMF performs operations 4 through 22 in FIG. 3 as discussed above. When UE A completes the registration, the context of UE A is in an active state. In a case where UE B initiates a registration process to AMF through 5G-GUTI, and the 5G-GUTI of UE B is identical to that of UE A, since AMF has established a security context with UE A and enabled NAS security, the integrity of the NAS message is protected; UE B also performs integrity protection on the NAS message according to the context of UE B. However, in AMF, the 5G-GUTI identifies the context of UE A, so the NAS message of UE B cannot pass the integrity check of AMF, and AMF will discard the registration message of UE B, resulting in a failure in the registration for UE B.

Possibly, for the following reasons the 5G-GUTI of UE B is identical to that of UE A.
1)AMF allocates the same 5G-GUTI to both UE A and UE B. According to the description in Section 5.9.4 of 3GPP TS 23.501, <5G-GUTI> := <GUAMI> <5G-TMSI>, and the globally unique AMF identifier (GUAMI) identifies one or more AMFs. The same AMF may assign the same 5G-Temporary Mobile Subscriber Identity (5G-TMSI) to different UEs, resulting in different UEs having the same 5G-GUTI.
2)AMF assigns a 5G-GUTI to UE B. After UE B leaves the network, AMF reassigns this 5G-GUTI to UE A, and then UE B accesses the network again.

In some embodiments of the present disclosure, there are provided a method for registration, a terminal device, a core network device, and a storage medium operated in the wireless communication system. Thereby, the failure in registration for a terminal device can addressed and the user experience is thus improved.

In the following, the method for registration, the terminal device, the core network device and their technical effects will be described.

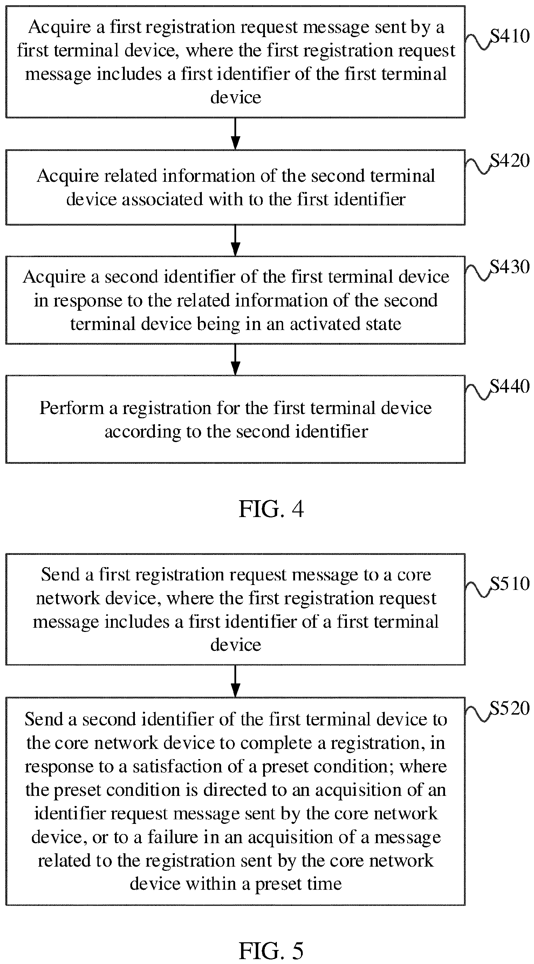

FIG. 4 depicts a flowchart showing a method for registration according to an embodiment. As shown in FIG. 4, the method is applicable to a core network device (such as the AMF), and the method includes the following operations.

At operation S410, a first registration request message sent by a first terminal device is acquired, where the first registration request message includes a first identifier of the first terminal device.

Since an embodiment of the present disclosure focuses on the failure of the terminal device in registration to the network, when operation S410 is performed, a second terminal device has accessed the network, and the third identifier of the second terminal device is the same as the first identifier.

The case where the third identifier is the same as the first identifier, may include either of the following two situations.

Situation #1, before the operation S410 is performed, the core network device obtains a second registration request message sent by the second terminal device, where the second registration request message includes the third identifier of the second terminal device, and the third identifier is the same as the first identifier. Registration is performed for the second terminal device according to the third identifier.

Situation #2, after the registration for the second terminal device is done, and before the operation S410 is performed, the core network device assigns a third identifier to the second terminal device, and the third identifier is the same as the first identifier.

In an embodiment, the first identifier and the third identifier are identifiers of the same type, such as 5G-GUTI.

At operation S420, related information about the second terminal device associated with to the first identifier is acquired.

In an embodiment, the related information about the second terminal device includes any one or more of the following information: the context of the second terminal device, the security context of the second terminal device, and the non-access stratum (NAS) security context of the second terminal device.

At operation S430, a second identifier of the first terminal device is acquired in response to the related information about the second terminal device being in an active state.

The related information about the second terminal device is in the active state, which indicates that the second terminal device has a NAS security connection at that time. In such a case, it is not possible for the core network device to perform a registration for the first terminal device through the first identifier. In such a case, the core network device obtains the second identifier of the first terminal device.

In an embodiment, the first identifier and the second identifier are identifiers of different types. The second identifier may be a subscription concealed identifier (SUCI).

In an embodiment, the acquisition of the second identifier at operation S430 may be done in any one of the following two schemes.

Scheme #A1: The core network device sends an identifier request message to the first terminal device; and acquires an identifier response message sent by the first terminal device, where the identifier response message includes the second identifier.

In scheme #A1, the core network device can proactively send an identifier request message to the first terminal device to obtain the second identifier.

Scheme #A2: A third registration request message sent by the first terminal device is acquired, where the third registration request message includes the second identifier.

In scheme #A2, the core network device does not proactively acquire the second identifier, instead, the second identifier is proactively sent to the core network device by the first terminal device. The first terminal device can proactively send the second identifier to the core network device at the time when the first terminal device fails to receive any registration-related messages sent by the core network device within a preset time. The first terminal device sends the second identifier to the core network device, when several attempts for the re-registration initiated by the first terminal device fail.

That is, before the core network device obtains the third registration request message sent by the first terminal device, the core network device may also: obtain the fourth registration request message sent by the first terminal device, where the fourth registration request message includes the first identifier; acquire related information about the second terminal device associated with the first identifier; and discard the fourth registration request message when the related information about the second terminal device is in an active state.

At operation S440, a registration is performed for the first terminal device according to the second identifier.

In an embodiment of the present disclosure, when the core network device fails to perform the registration for the first terminal device through the first identifier, the core network device can obtain the second identifier to perform the registration for the first terminal device. The success in the network registration for the first terminal device is thus ensured, and the user experience is improved.

FIG. 5 depicts a flowchart showing another method for registration according to an embodiment. As shown in FIG. 5, the method is applicable to a first terminal device (such as the UE A), and the method includes the following operations.

At operation S510, a first registration request message is sent to a core network device, where the first registration request message includes a first identifier of a first terminal device.

In an embodiment, the first identifier may be the 5G-GUTI.

At operation S520, a second identifier of the first terminal device is sent to the core network device to complete a registration, in response to a satisfaction of a preset condition; where the preset condition is directed to an acquisition of an identifier request message sent by the core network device, or to a failure in an acquisition of a message related to the registration sent by the core network device within a preset time.

In an embodiment, the first identifier and the second identifier are identifiers of different types. The second identifier can be SUCI.

In an embodiment, when the preset condition is directed to an acquisition of the identifier request message sent by the core network device, the first terminal device sends a second identifier to the core network device, which includes sending an identifier response message to the core network device, where the identifier response message includes the second identifier.

In an embodiment, when the preset condition is directed to a failure in the acquisition of a message related to registration sent by the core network device within a preset time, the first terminal device sends a second identifier to the core network device, which includes sending a third registration request message to the core network device, where the third registration request message includes the second identifier.

Before the first terminal device sends the third registration request message to the core network device, the method further includes,
the first terminal device sets a current iteration number K to 0, and sends a fourth registration request message to the core network device, where the fourth registration request message includes a first identifier; and sets the current iteration number K as K=K+1, in response to a failure in the acquisition of the message related to the registration sent by the core network device within the preset time; and returning and keeping sending the fourth registration request message to the core network device in response to the current iteration number K being less than a maximum iteration number, and until the current iteration number K equals to the maximum iteration number.

Some embodiments are provided below to illustrate the method for registration provided in the embodiments shown in FIGS. 4- 5 of the present disclosure. The following embodiments can be implemented alone or in combination. In the following embodiments, the first terminal device is denoted as UE B, the second terminal device is denoted as UE A, and the core network device is denoted as AMF. The first identifier of the first terminal device is denoted as 5G-GUTI of UE B, the second identifier of the first terminal device is denoted as SUCI of UE B, and the third identifier of the second terminal device is denoted as 5G-GUTI of UE A.

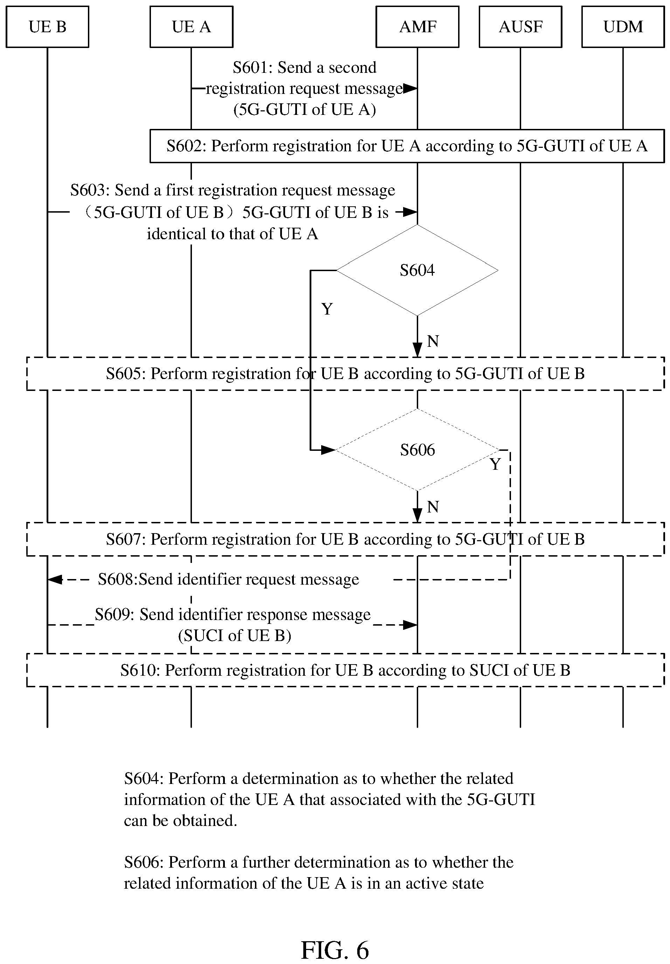

FIG. 6 depicts a flowchart showing the interactions in a method for registration according to Example Embodiment One. As shown in FIG. 6, the method includes the following operations.

At operation S601, UE A sends a second registration request message to AMF, and the second registration request message includes the 5G-GUTI of UE A.

At operation S602, the AMF performs a registration for UE A according to the 5G-GUTI of the UE A.

Please refer to the operations 4 through 22 shown in FIG. 3, for the registration for UE A, and which will not be repeated here for brevity.

At operation S603, UE B sends a first registration request message to AMF. The first registration request message includes the 5G-GUTI of UE B, and the 5G-GUTI of UE A is identical to that of UE B.

At operation S604, the AMF performs a determination as to whether the related information about UE A that is associated with the 5G-GUTI can be obtained.

At operation S605, the AMF performs a registration for UE B according to the 5G-GUTI of UE B in response to a failure in the acquisition of the relevant information of UE A.

The case where the AMF fails to acquire the related information about UE A, indicates that the AMF has not yet established a security context with UE A in that case. In such a case, the AMF can perform registration for UE B according to the 5G-GUTI of UE B, with reference to operations 4 through 22 shown in FIG. 3.

At operation S606, a further determination is performed as to whether the related information about UE A is in an active state in response to a determination that the AMF can obtain the related information about UE A.

At operation S607, a registration for UE B is performed according to the 5G-GUTI of UE B, in response to a determination that the related information about UE A is in an inactive state.

The case where the related information about UE A is in an inactive state, indicates that NAS security is not enabled although AMF has established a security context with UE A in that case. In such a case, the registration for UE B can be performed according to the 5G-GUTI of UE B, with reference to operations 4 through 22 in FIG. 3.

At operation S608, an identifier request message is sent to UE B, in response to a determination that the related information about UE A is in an active state.

The case where the related information about UE A is in an active state, indicates that the AMF has established a security context with UE A and the NAS security is enabled in that case, and the integrity of the NAS message is protected. In the AMF, the 5G-GUTI identifies the context of UE A. Hence, the NAS message of UE B cannot pass the integrity check of AMF, thus the AMF needs to send an identifier request message to UE B.

At operation S609, UE B sends an identifier response message to the AMF, and the identifier response message includes the SUCI of UE B.

At operation S610, the AMF performs a registration for UE B according to the SUCI of UE B.

The AMF performs the registration according to the SUCI of UE B, with reference to the operations 8 through 22 shown in FIG. 3. In this way, the network registration for UE B can be completed and the user experience is thus improved.

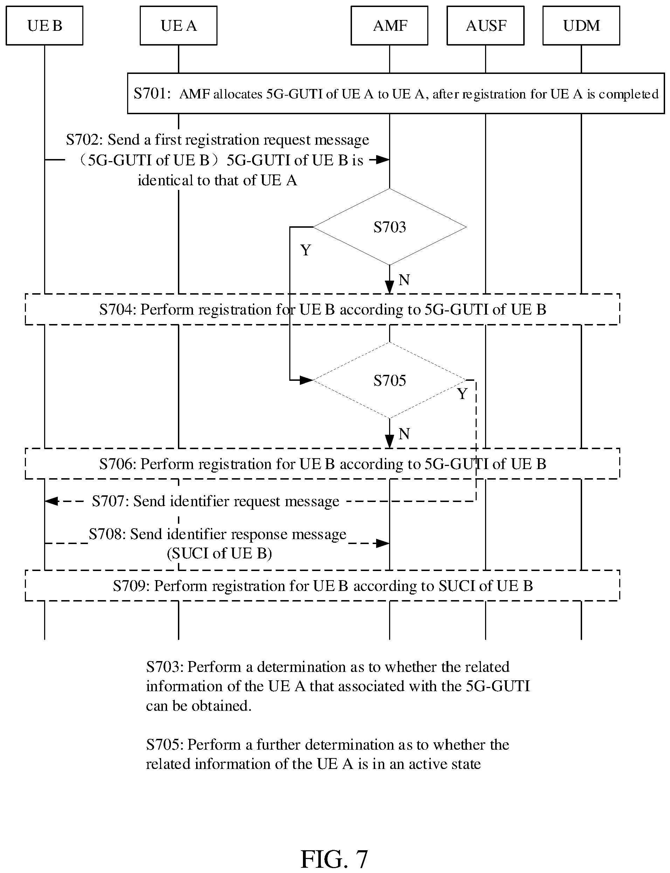

FIG. 7 depicts a flowchart showing the interactions in a method for registration according to Example Embodiment Two. As shown in FIG. 7, the method includes the following operations.

At operation S701, the AMF allocates the 5G-GUTI of UE A to UE A, after the registration for UE A is completed.

Before the operation S701 is performed, UE A has already registered to the network with another 5G-GUTI. Due to the bandwidth requirement and other factors, AMF can reassign a 5G-GUTI for UE A, i.e., the 5G-GUTI of UE A.

At operation S702, UE B sends a first registration request message to AMF. The first registration request message includes the 5G-GUTI of UE B, and the 5G-GUTI of UE A is identical to that of UE B.

At operation S703, the AMF performs a determination as to whether the related information about the UE A that is associated with the 5G-GUTI can be obtained.

At operation S704, the AMF performs a registration for UE B according to the 5G-GUTI of UE B in response to a failure in the acquisition of the related information about UE A.

The case where the AMF fails to acquire the related information about UE A, indicates that the AMF has not yet established a security context with UE A in that case. In such a case, the AMF can perform registration for UE B according to the 5G-GUTI of UE B, with reference to operations 4 through 22 shown in FIG. 3.

At operation S705, a further determination is performed as to whether the related information about UE A is in an active state in response to a determination that the AMF can obtain the related information related of UE A.

At operation S706, a registration for UE B is performed according to the 5G-GUTI of UE B, in response to a determination that the related information about UE A is in an inactive state.

The case where the related information about UE A is in an inactive state, indicates that NAS security is not enabled although AMF has established a security context with UE A in that case. In such a case, the registration for UE B can be performed according to the 5G-GUTI of UE B, with reference to operations 4 through 22 in FIG. 3.

At operation S707, an identifier request message is sent to UE B, in response to a determination that the related information about UE A is in an active state.

The case where the related information about UE A is in an active state, indicates that the AMF has established a security context with UE A and the NAS security is enabled in that case, and the integrity of the NAS message is protected. In the AMF, the 5G-GUTI identifies the context of UE A. Hence, the NAS message of UE B cannot pass the integrity check of AMF, thus the AMF needs to send an identifier request message to UE B.

At operation S708, UE B sends an identifier response message to the AMF, and the identifier response message includes the SUCI of UE B.

At operation S709, the AMF performs a registration for UE B according to the SUCI of UE B.

The AMF performs the registration for the UE B according to the SUCI of UE B, with reference to the operations 8 through 22 shown in FIG. 3. In this way, the network registration for UE B can be completed and the user experience is thus improved.

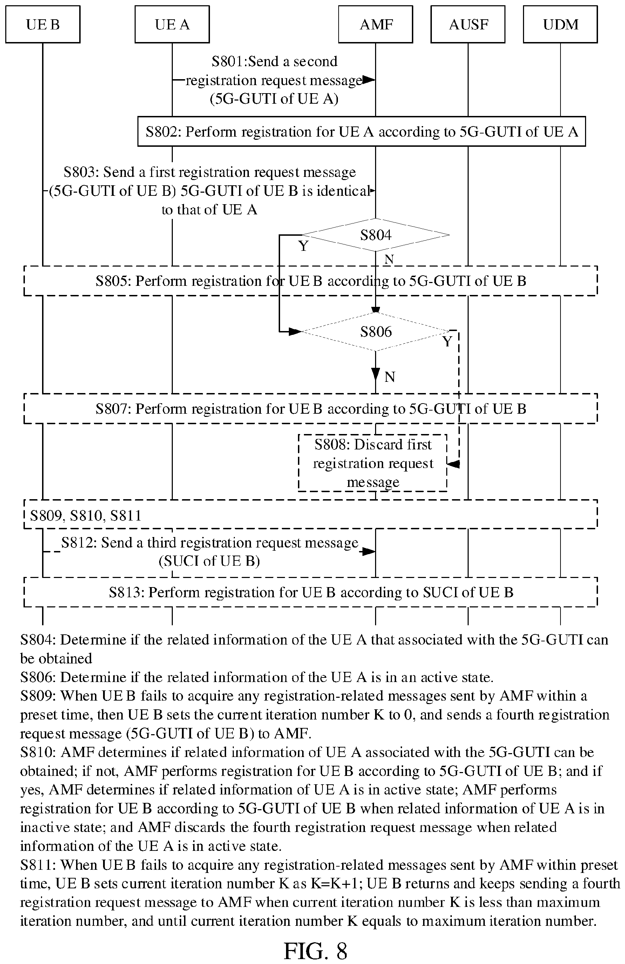

FIG. 8 depicts a flowchart showing the interactions in a method for registration according to Example Embodiment Three. As shown in FIG. 8, the method includes the following operations.

At operation S801, UE A sends a second registration request message to AMF, and the second registration request message includes the 5G-GUTI of UE A.

At operation S802, the AMF performs registration for UE A according to the 5G-GUTI of UE A.

Please refer to the operations 4 through 22 shown in FIG. 3, for the registration for UE A, and which will not be repeated here for brevity.

At operation S803, UE B sends a first registration request message to AMF, where the first registration request message includes the 5G-GUTI of UE B, and the 5G-GUTI of UE A is identical to that of UE B.

At operation S804, the AMF performs a determination as to whether the related information about the UE A that is associated with the 5G-GUTI can be obtained.

At operation S805, the AMF performs a registration for UE B according to the 5G-GUTI of UE B in response to a failure in the acquisition of the related information about UE A.

The case where the AMF fails to acquire the related information about UE A, indicates that the AMF has not yet established a security context with UE A in that case. In such a case, the AMF can perform registration for UE B according to the 5G-GUTI of UE B, with reference to operations 4 through 22 shown in FIG. 3.

At operation S806, a further determination is performed as to whether the related information about UE A is in an active state in response to a determination that the AMF can obtain the related information related of UE A.

At operation S807, a registration for UE B is performed according to the 5G-GUTI of UE B, in response to a determination that the related information about UE A is in an inactive state.

The case where the related information about UE A is in an inactive state, indicates that NAS security is not enabled although AMF has established a security context with UE A in that case. In such a case, the registration for UE B can be performed according to the 5G-GUTI of UE B, with reference to operations 4 through 22 in FIG. 3.

At operation S808, the first registration request message is discarded, in response to a determination that the related information about UE A is in an active state.

The case where the related information about UE A is in an active state, indicates that the AMF has established a security context with UE A and the NAS security is enabled in that case, and the integrity of the NAS message is protected. In the AMF, the 5G-GUTI identifies the context of UE A. Hence, the NAS message of UE B cannot pass the integrity check of AMF, thus the AMF discards the first registration request message.

At operation S809, when UE B fails to acquire any registration-related messages sent by AMF within a preset time, then UE B sets the current iteration number K to 0, and sends a fourth registration request message to AMF, where the fourth registration request message includes the 5G-GUTI of UE B.

At operation S810, the AMF performs a determination as to whether the related information about the UE A that is associated with the 5G-GUTI can be obtained; the AMF performs a registration for UE B according to the 5G-GUTI of UE B, in response to a determination that the related information about the UE A that associated with the 5G-GUTI can not be obtained; the AMF performs a further determination as to whether the related information about UE A is in an active state in response to a determination that the related information about UE A that associated with the 5G-GUTI can be obtained; the AMF performs a registration for UE B according to the 5G-GUTI of UE B in response to a determination that the related information about UE A is in an inactive state; and the AMF discards the fourth registration request message in response to a determination that the related information about the UE A is in an active state.

At operation S811, when UE B fails to acquire any registration-related messages sent by the AMF within a preset time, then the UE B sets the current iteration number K as K=K+1; UE B returns to the operation in which the UE B sends a fourth registration request message to the AMF when the current iteration number K is less than a maximum iteration number, and until the current iteration number K equals to the maximum iteration number.

In order to ensure that UE B can access the network successfully, UE B can retry the registration several times when UE B fails to acquire any registration-related messages sent by AMF within a preset time. The number of attempts (the maximum number of iterations) can be designed according to the practical situations. In an example, the maximum iteration number is 3.

During this procedure, if the security context between the AMF and UE A is disconnected, or the NAS security is disabled, then registration for UE B can be performed according to the 5G-GUTI of UE B with reference to operations 4 through 22 shown in FIG. 3. Alternatively, if the security context established between the AMF and UE A is maintained while the NAS security is enabled, the following operations S812-S813 are performed.

At operation S812, UE B sends a third registration request message to the AMF, where the third registration request message includes the SUCI of UE B.

At operation S813, the AMF performs a registration for UE B according to the SUCI of UE B.

UE B proactively sends a third registration request message including the SUCI of UE B to the AMF, such that AMF can perform a registration for UE B according to the SUCI of UE B with reference to operations 8-22 shown in FIG. 3. In this way, the network registration for UE B can be completed, and the user experience is thus improved.

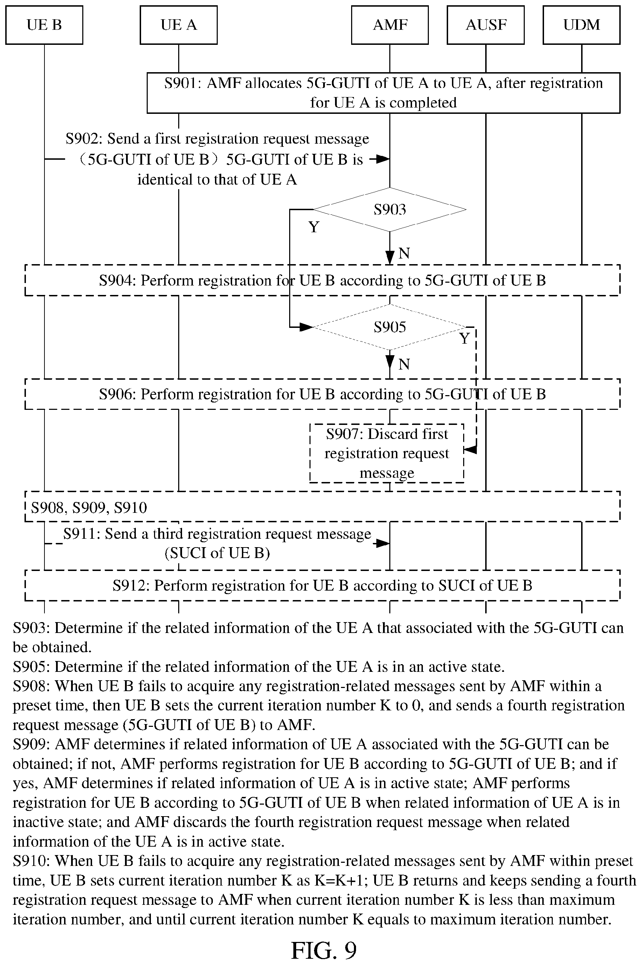

FIG. 9 depicts a flowchart showing the interactions in a method for registration according to Example Embodiment Four. As shown in FIG. 9, the method includes the following operations.

At operation S901, the AMF allocates the 5G-GUTI of UE A to UE A, after the registration for UE A is completed.

Before the operation S901 is performed, UE A has already registered to the network with another 5G-GUTI. Due to the bandwidth requirement and other factors, AMF can reassign a 5G-GUTI for UE A, i.e., the 5G-GUTI of UE A.

At operation S902, UE B sends a first registration request message to AMF, where the first registration request message includes the 5G-GUTI of UE B, and the 5G-GUTI of UE A is identical to that of UE B.

At operation S903, the AMF performs a determination as to whether the related information about the UE A that is associated with the 5G-GUTI can be obtained.

At operation S904, the AMF performs a registration for UE B according to the 5G-GUTI of UE B in response to a failure in the acquisition of the related information about UE A.

The case where the AMF fails to acquire the related information about UE A, indicates that the AMF has not yet established a security context with UE A in that case. In such a case, the AMF can perform a registration for UE B according to the 5G-GUTI of UE B, with reference to operations 4 through 22 shown in FIG. 3.

At operation S905, a further determination is performed as to whether the related information about UE A is in an active state in response to a determination that the AMF can obtain the related information related to UE A.

At operation S906, a registration for UE B is performed according to the 5G-GUTI of UE B, in response to a determination that the related information about UE A is in an inactive state.

The case where the related information about UE A is in an inactive state, indicates that NAS security is not enabled although AMF has established a security context with UE A in that case. In such a case, the registration for UE B can be performed according to the 5G-GUTI of UE B, with reference to operations 4 through 22 in FIG. 3.

At operation S907, the first registration request message is discarded, in response to a determination that the related information about UE A is in an active state.

The case where the related information about UE A is in an active state, indicates that the AMF has established a security context with UE A and the NAS security is enabled in that case, and the integrity of the NAS messages is protected. In the AMF, the 5G-GUTI identifies the context of UE A. Hence, the NAS message of UE B cannot pass the integrity check of AMF, thus the AMF discards the first registration request message.

At operation S908, when UE B fails to acquire any registration-related messages sent by AMF within a preset time, then UE B sets the current iteration number K to 0, and sends a fourth registration request message to AMF, where the fourth registration request message includes the 5G-GUTI of UE B.

At operation S909, the AMF performs a determination as to whether the related information about the UE A that is associated with the 5G-GUTI can be obtained; the AMF performs a registration for UE B according to the 5G-GUTI of UE B, in response to a determination that the related information about the UE A that associated with the 5G-GUTI can not be obtained; the AMF performs a further determination as to whether the related information about the UE A is in an active state in response to a determination that the related information about the UE A that associated with the 5G-GUTI can be obtained; the AMF performs a registration for UE B according to the 5G-GUTI of UE B in response to a determination that the related information about the UE A is in an inactive state; and the AMF discards the fourth registration request message in response to a determination that the related information about the UE A is in an active state.

At operation S910, when UE B fails to acquire any registration-related messages sent by the AMF within a preset time, then the UE B sets the current iteration number K as K=K+1; UE B returns to the operation in which the UE B sends a fourth registration request message to the AMF when the current iteration number K is less than a maximum iteration number, and until the current iteration number K equals to the maximum iteration number.

In order to ensure that UE B can access the network successfully, UE B can retry the registration several times when UE B fails to acquire any registration-related messages sent by AMF within a preset time. The number of attempts (the maximum number of iterations) can be designed according to the practical situations. In an example, the maximum iteration number is 3.

During this procedure, if the security context between the AMF and UE A is disconnected, or the NAS security is disabled, then registration for UE B can be performed according to the 5G-GUTI of UE B with reference to operations 4 through 22 shown in FIG. 3. Alternatively, if the security context established between the AMF and UE A is maintained while the NAS security is enabled, the following operations S911-S912 are performed.

At operation S911, UE B sends a third registration request message to the AMF, where the third registration request message includes the SUCI of UE B.

At operation S912, the AMF performs a registration for UE B according to the SUCI of UE B.

UE B proactively sends a third registration request message including the SUCI of UE B to the AMF, such that AMF can perform a registration for UE B according to the SUCI of UE B with reference to operations 8-22 shown in FIG. 3. In this way, the network registration for UE B can be completed, and the user experience is thus improved.

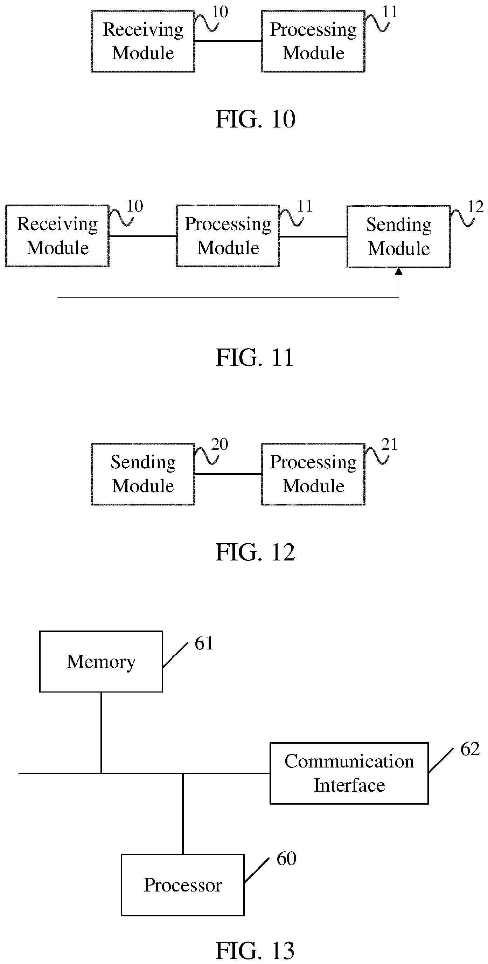

FIG. 10 depicts a schematic diagram showing a core network device according to an embodiment. As shown in FIG. 10, the core network device includes a receiving module 10 and a processing module 11.

The receiving module 10 is configured to obtain a first registration request message sent by a first terminal device, where the first registration request message includes a first identifier of the first terminal device.

The processing module 11 is configured to obtain information related to the second terminal device that is associated with the first identifier.

The receiving module 10 is further configured to obtain a second identifier of the first terminal device in response to a determination that the related information about the second terminal device is in an active state.

The processing module 11 is further configured to perform a registration for the first terminal device according to the second identifier.

The core network device set forth in this embodiment is configured to carry out the method for registration described the above embodiment(s), and the implementation principle and technical effect of the core network device set forth in this embodiment are similar to those described in the above embodiment(s), so the details are not repeated here.

In an embodiment, the related information about the second terminal device includes any one or more of the following information: the context of the second terminal device, the security context of the second terminal device, and the non-access stratum (NAS) security context of the second terminal device.

In an embodiment, the receiving module 10 is further configured to obtain a second registration request message sent by the second terminal device, where the second registration request message includes a third identifier of the second terminal device, and the third identifier is identical to the first identifier.

The processing module 11 is further configured to perform a registration for the second terminal device according to the third identifier.

In an embodiment, the processing module 11 is further configured to assign a third identifier to the second terminal device after the registration for the second terminal device is completed, where the third identifier is identical to the first identifier.

FIG. 11 depicts a schematic diagram showing another core network device according to an embodiment. As shown in FIG. 11, the core network device further includes a sending module 12 on the basis of FIG. 10.

The sending module 12 is configured to send an identifier request message to the first terminal device.

The receiving module 10 is configured to obtain an identifier response message sent by the first terminal device, where the identifier response message includes a second identifier.

In an embodiment, the receiving module 10 is further configured to obtain a third registration request message sent by the first terminal device, where the third registration request message includes a second identifier.

In an embodiment, the receiving module 10 is further configured to obtain a fourth registration request message sent by the first terminal device, where the fourth registration request message includes a first identifier.

The processing module 11 is configured to obtain the related information about the second terminal device that is associated with the first identifier; and to discard the fourth registration request message in response to the related information about the second terminal device being in an active state.

FIG. 12 depicts a schematic diagram showing a terminal device according to an embodiment. As shown in FIG. 12, the terminal device includes a sending module 20 and a processing module 21.

The sending module 20 is configured to send a first registration request message to a core network device, where the first registration request message includes a first identifier of a first terminal device.

The processing module 21 is configured to confirm if a preset condition is met, where the preset condition is that an identifier request message sent by a core network device is obtained, or any registration-related message sent by the core network device is not obtained within a preset time.

The sending module 20 is further configured to send a second identifier of the first terminal device to the core network device to complete the registration.

The terminal device set forth in this embodiment is configured to carry out the method for registration described the above embodiment(s), and the implementation principle and technical effect of the terminal device set forth in this embodiment are similar to those described in the above embodiment(s), so the details are not repeated here.

In an embodiment, the preset condition is that the identifier request message sent by the core network device is acquired.

The sending module 20 is configured to send an identifier response message to the core network device, where the identifier response message includes a second identifier.

In an embodiment, the preset condition is that any message related to registration sent by the core network device is not obtained within a preset time.

The sending module 20 is configured to send a third registration request message to the core network device, where the third registration request message includes a second identifier.

In an embodiment, the processing module 21 is further configured to set the current iteration number K to 0. The sending module 20 is further configured to send a fourth registration request message to the core network device, where the fourth registration request message includes a first identifier.

The processing module 21 is further configured to set the current iteration number K as K=K+1, when it is confirmed a failure in the acquisition of any registration-related messages sent by the core network device within a preset time. And the sending module 20 is configured to return and keep performing the operation in which a fourth registration request message is sent to the core network device when the current iteration number K is less than a maximum iteration number, and until the current iteration number K equals the maximum iteration number.

An embodiment of the present disclosure provides a core network device, which includes a processor configured to carry out the method according to any one of the embodiments of the present disclosure when executing a computer program. The following embodiment provides a schematic diagram showing a core network device as an AMF.

FIG. 13 depicts a schematic diagram showing an AMF according to an embodiment. As shown in FIG. 13, the AMF includes a processor 60, a memory 61, and a communication interface 62. One or more processors 60 can be provided in the AMF, and FIG. 13 shows one processor 60 by way of an example. The processor 60 and the memory 61, the communication interface 62 in the AMF can be connected by a bus or the like, and FIG. 13 shows the connection via the bus by way of an example. Bus refers to one or more of several bus structures, including memory bus or memory controller, peripheral bus, graphics acceleration port, processor or local bus utilizing any of several bus structures.

As a computer-readable storage medium, the memory 61 can be configured to store software programs, computer-executable programs and modules, such as program instructions/modules corresponding to the method described in any one of the embodiments of the present disclosure. The software programs, instructions and modules stored in the memory 61, when are executed by the processor 60, causes the processor 60 to perform various functional applications and data processing of the AMF, to carry out any one of the above-mentioned methods.

The memory 61 may include a program storage section and a data storage section, in which the program storage section may store an operating system and application programs for performing at least one operation, and data storage section may store data created according to the operation of terminal device, or the like. In addition, the memory 61 can include a high-speed random-access memory and a nonvolatile memory, such as at least one disk memory device, a flash memory device, or other nonvolatile solid-state memory devices. In some implementations, the memory 61 may include memory remotely arranged with respect to the processor 60, and the remote memory may be connected to the AMF through a network. Examples of the above networks include, but are not limited to, the Internet, enterprise intranet, network, mobile communication network, and combinations thereof.

The communication interface 62 can be configured to receive and send data.

An embodiment of the present disclosure provides a terminal device, which includes a processor configured to carry out the method according to any one of the embodiments of the present disclosure when executing a computer program. The following embodiment provides a schematic diagram showing a terminal device, as a UE.

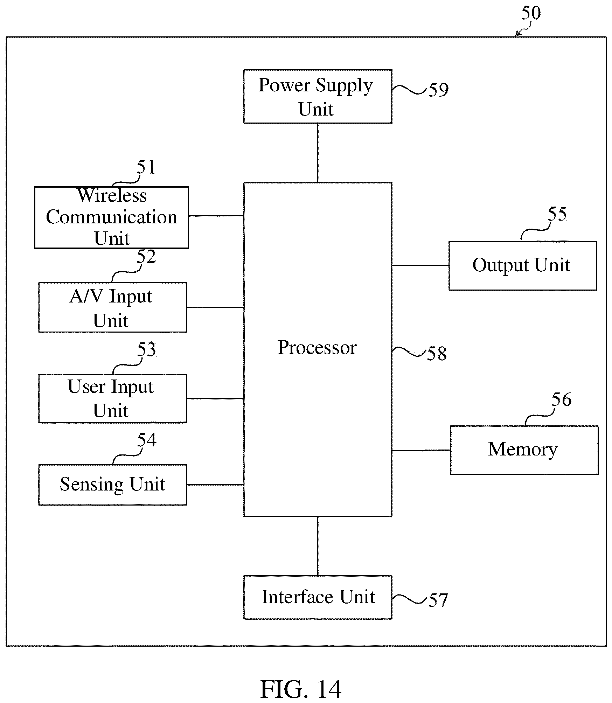

FIG. 14 depicts a schematic diagram showing a UE according to an embodiment of the present disclosure. The UE may be implemented in various forms, and the UE in an embodiment of the present disclosure may include, but is not limited to, mobile terminal devices such as a cell phone, a smart phone, a laptop computer, a digital broadcasting receiver, a personal digital assistant (PDA), a portable device (PAD), a portable media player (PMP), a navigation device, an in-vehicle terminal device, an in-vehicle display terminal, an in-vehicle electronic rearview mirror, and so on, as well as fixed terminal devices such as a digital television (TV), a desktop computer, or the like.

As shown in FIG. 14, the UE 50 may include a wireless communication unit 51, an Audio/Video (A/V) input unit 52, a user input unit 53, a sensing unit 54, an output unit 55, a memory 56, an interface unit 57, a processor 58, a power supply unit 59, and the like. FIG. 14 shows a UE including various components, but it should be understood that not all the components shown are necessary. Alternatively, more or fewer components may be included.

In this embodiment, the wireless communication unit 51 allows radio communication between the UE 50 and a base station or a network. The A/V input unit 52 is configured to receive audio or video signals. The user input unit 53 may generate key input data according to commands input by the user to control various operations of the UE 50. The sensing unit 54 detects the current state of the UE 50, the position of the UE 50, the presence or absence of a user's touch input to the UE 50, the orientation of the UE 50, the acceleration or deceleration movement and direction of the UE 50, and the like, and generates a command or signal for controlling the operation of the UE 50. The interface unit 57 serves as an interface through which at least one external device can connect with the UE 50. The output unit 55 is configured to provide an output visual, audio and/or tactile signals. The memory 56 may store software programs for processing and control operations performed by the processor 58, etc., or may temporarily store data that has been or to be output. The memory 56 may include storage medium of at least one type. Moreover, the UE 50 may cooperate with a network storage device that performs the storage function of the memory 56 through a network connection. The processor 58 generally controls the overall operation of the UE 50. The power supply unit 59 receives external power or internal power under the control of the processor 58 and provides appropriate power required for operating various elements and components.

The processor 58 executes at least one functional application and data processing by running the program stored in the memory 56, for example, to realize the method according to any one of the embodiments of the present disclosure.

An embodiment of the present disclosure provides a computer-readable storage medium storing a computer program which, when executed by a processor, causes the processor to carry out the method described in any one embodiment of the present disclosure.

The computer storage medium in an embodiment of present disclosure can take the form of any combination of one or more computer-readable medium. The computer-readable medium can be a computer-readable signal medium or a computer-readable storage medium. The computer-readable storage media can be, for example, but is not limited to: systems, apparatus, or devices of electricity, magnetism, optical, electromagnetism, infrared, or semiconductors, or any combination of the above. Computer-readable storage media (non-exhaustive list) includes: electrical connections with one or more wires, portable computer disks, hard drives, Random Access Memory (RAM), Read Only Memory (ROM), Erasable Programmable Read Only Memory (EPROM), flash memory, fiber optic, portable compact disc Read-Only Memory (CD-ROM), optical storage devices, magnetic storage devices, or any suitable combination of the above. In the present disclosure, the computer-readable storage medium can be any tangible medium that contains or stores a program, which can be used by or in combination with an instruction execution system, apparatus, or device.

The computer-readable signal medium can include data signals propagated in the baseband or as part of the carrier wave, which carry computer-readable program code. This type of transmitted data signal can take various forms, including but not limited to electromagnetic signals, optical signals, or any suitable combination of the above. The computer-readable signal medium can also be any computer-readable medium other than a computer-readable storage medium, which can send, propagate, or transmit programs used by or in combination with instruction execution systems, apparatus, or devices.

The program code contained on computer-readable media can be transmitted using any suitable medium, including but not limited to: wireless, wire, optical cable, Radio Frequency (RF), etc., or any suitable combination of the above.

Computer program code for executing the operations of the present disclosure may be written in one or more programming languages or combinations thereof, including object-oriented programming languages such as Java, Smalltalk, C++, Ruby, or Go, and conventional procedural programming languages such as "C" or similar programming languages. Program code can be completely executed on the user's computer, partially executed on the user's computer, executed as a standalone software package, partially executed on the user's computer, partially executed on a remote computer, or completely executed on a remote computer or server. In terms of remote computers, remote computers can connect to user computers through any type of network, including a local area network (LAN) or wide area network (WAN) or can connect to external computers (such as utilizing an Internet service provider to connect through the Internet).

It should be understood by those having ordinary skills in the art that the term user equipment covers any suitable type of wireless user equipment, such as a mobile phone, a portable data processing device, a portable web browser, or a vehicle-mounted mobile station.

Generally, various embodiments of the present disclosure may be implemented as hardware or dedicated circuits, software, logic or any suitable combination thereof. For example, some aspects may be implemented as hardware, while other aspects may be implemented as firmware or software executable by a controller, a microprocessor or other computing device, although the present disclosure is not limited thereto.

Some embodiments of the present disclosure can be implemented by a data processor of a mobile device executing computer program instructions, for example, in a processor entity, or by hardware, or by a combination of software and hardware. Computer program instructions can be assembly instructions, instruction set architecture (ISA) instructions, machine instructions, machine-related instructions, microcode, firmware instructions, state setting data, or source code or object code written in any combination of one or more programming languages.

The block diagram of any logic flow in the drawings of the present disclosure may represent program process, or may represent interconnected logic circuits, modules and functions, or may represent the combination of program process and logic circuits, modules and functions. Computer programs can be stored in the memory. The memory can be of any type suitable for the local technical environment and can be realized with any suitable data storage technology, such as, but not limited to, read-only memory (ROM), random access memory (RAM), optical memory devices and systems (digital versatile disc (DVD) or CD disc), etc. Computer-readable media may include non-transitory storage media. The data processor can be of any type suitable for the local technical environment, such as but not limited to a general-purpose computer, a special-purpose computer, a microprocessor, a digital signal processor (DSP), an application-specific integrated circuit (ASIC), a programmable logic device (FGPA) and a processor based on a multi-core processor architecture.

## Claims

1. A method for registration, applied to a core network device, the method comprising,
acquiring a first registration request message sent by a first terminal device, wherein the first registration request message comprises a first identifier of the first terminal device;
acquiring related information about a second terminal device associated with the first identifier;
acquiring a second identifier of the first terminal device, in response to the related information about the second terminal device being in an active state; and
performing a registration for the first terminal device according to the second identifier.

2. The method as claimed in claim 1, wherein the related information about the second terminal device comprises at least one of,
a context of the second terminal device;
a security context of the second terminal device; or
a non-access stratum (NAS) security context of the second terminal device.

3. The method as claimed in claim 1, wherein before acquiring the first registration request message sent by the first terminal device, the method further comprises,
acquiring a second registration request message sent by the second terminal device, wherein the second registration request message comprises a third identifier of the second terminal device, and the third identifier is identical to the first identifier; and
performing a registration for the second terminal device according to the third identifier.

4. The method as claimed in claim 1, wherein before acquiring the first registration request message sent by the first terminal device, the method further comprises,
assigning a third identifier to the second terminal device after the registration for the second terminal device is completed, wherein the third identifier is identical to the first identifier.

5. The method as claimed in any one of claims 1 to 4, wherein acquiring the second identifier comprises,
sending an identifier request message to the first terminal device; and
acquiring an identifier response message sent by the first terminal device, wherein the identifier response message comprises the second identifier.

6. The method as claimed in any one of claims 1 to 4, wherein acquiring the second identifier comprises,
acquiring a third registration request message sent by the first terminal device, wherein the third registration request message comprises the second identifier.

7. The method as claimed in claim 6, wherein before acquiring the third registration request message sent by the first terminal device, the method further comprises,
acquiring a fourth registration request message sent by the first terminal device, wherein the fourth registration request message comprises the first identifier;
acquiring related information about the second terminal device associated with the first identifier; and
discarding the fourth registration request message in response to the related information about the second terminal device being in an active state.

8. A method for registration, applied to a first terminal device, the method comprising,
sending a first registration request message to a core network device, wherein the first registration request message comprises a first identifier of the first terminal device; and
sending a second identifier of the first terminal device to the core network device to complete a registration, in response to a satisfaction of a preset condition; wherein the preset condition is directed to one of, an acquisition of an identifier request message sent by the core network device, or a failure in an acquisition of a message related to the registration sent by the core network device within a preset time.

9. The method as claimed in claim 8, wherein the preset condition is directed to the acquisition of the identifier request message sent by the core network device; and sending the second identifier to the core network device comprises,
sending an identifier response message to the core network device, wherein the identifier response message comprises the second identifier.

10. The method as claimed in claim 8, wherein the preset condition is directed to the failure in the acquisition of the message related to the registration sent by the core network device within the preset time; and sending the second identifier to the core network device comprises,
sending a third registration request message to the core network device, wherein the third registration request message comprises the second identifier.

11. The method as claimed in claim 10, wherein before sending the third registration request message to the core network device, the method further comprises,
setting a current iteration number K to 0, and sending a fourth registration request message to the core network device, wherein the fourth registration request message comprises the first identifier; and
setting the current iteration number K as K=K+1, in response to the failure in the acquisition of the message related to the registration sent by the core network device within the preset time; and keeping sending the fourth registration request message to the core network device in response to the current iteration number K being less than a maximum iteration number, until the current iteration number K equals to the maximum iteration number.

12. A core network device, comprising, a processor configured to execute a computer program which, when executed by the processor, causes the processor to carry out the method as claimed in any one of claims 1 to 7.

13. A terminal device, comprising, a processor configured to execute a computer program which, when executed by the processor, causes the processor to carry out the method as claimed in any one of claims 8 to 11.

14. A computer-readable storage medium storing a computer program which, when executed by a processor, causes the processor to carry out the method as claimed in any one of claims 1 to 7, or the method as claimed in any one of claims 8 to 11.
